# EUROPEAN PATENT APPLICATION

(11) **EP 3 407 281 A1**
(43) Date of publication of application: **28.11.2018**
(21) Application number: 17172896.7
(22) Date of filing: 24.05.2017
(51) Int. Cl.: G06Q 20/42, G06Q 20/40

(54) **TRANSACTION CONTROL**

(71) Applicant: MasterCard International Incorporated, Purchase, NY 10577 (US)
(72) Inventor: ATKINS, Michael C., Dublin 24 (IE)
(74) Representative: Lawrence, Richard Anthony

(57) **Abstract**

A method for a user to perform a transaction with a merchant using a user account associated with a user computing device, wherein the user account is associated with a transaction infrastructure, the method comprising: initiating the transaction including providing a public identity of the user to the merchant; the merchant determining user account information associated with the public identity, and providing transaction details to the transaction infrastructure for approval; sending the transaction details to the user computing device; the user approving or disapproving the transaction at the user computing device, and sending the approval or disapproval to the transaction infrastructure ; wherein the transaction is approved or rejected through the transaction infrastructure after the user's approval or disapproval is received. Suitable methods and apparatus for the user computing device and the issuer server are also described.

## Description

### Field of Invention

This invention relates generally to transaction control, and in particular embodiments relates to a method and system for an owner to control the making of transactions through a transaction infrastructure.

### Background of Invention

Payment cards such as credit cards and debit cards are very widely used for all forms of financial transaction. The use of payment cards has evolved significantly with technological developments over recent years. Many payments are made at retail locations, typically with a physical payment card interacting with a point of sale (POS) terminal to support a transaction authorization. However, transactions are more and more frequently completed via internet, mail, telephone orders etc., i.e. "card not present" (CNP) transactions are becoming more and more common. In such cases, private banking information relating to the card, account and cardholder are typically required to securely complete a transaction.

On the other hand, greater understanding and better measurement of user behaviour has allowed for more sophisticated fraud detection in payment device transactions. A further development has been for users to determine their own allowed or predicted behaviour, allowing for stronger fraud detection when activity has been outside a user-set boundary. This can be achieved, for example, with the proprietor's "In Control" solution- a card issuer provides a web site or mobile app using "In Control" that enables a user to set a variety of different limits and permissions for cards under that user's control.

This approach is very useful to allow effective use of group cards or cards for which an owner has delegated limited authority to a purchaser - the owner can set purchase limits or other constraints on behaviour, and a transaction will only be authorised by an issuer if these limits or constraints are met.

There are however many situations in which a more flexible solution would be desirable, such as when a cardholder might want to control one off purchases made by a third party purchaser on their behalf without having to provide a physical card or payment device to a purchaser. It would be desirable to allow greater flexibility in the making of transactions while ensuring adequate control for both the cardholder and other affected parties.

### Summary of Invention

In a first aspect, the invention provides a method for a user to perform a transaction with a merchant using a user account associated with a user computing device, wherein the user account is associated with a transaction infrastructure. The method comprises the steps of: initiating the transaction including providing a public identity of the user to the merchant; the merchant determining user account information associated with the public identity, and providing transaction details to the transaction infrastructure for approval; sending the transaction details to the user computing device; the user approving or disapproving the transaction at the user computing device, and sending the approval or disapproval to the transaction infrastructure. The transaction is approved or rejected through the transaction infrastructure after the user's approval or disapproval is received.

In embodiments, providing transaction details to the transaction infrastructure comprises providing an indication that the user account information was obtained from public identity information.

In specific embodiments, the public identity information is an email address. In some such embodiments, obtaining user account information involves a DNS lookup.

In embodiments, sending transaction details to a user computing device comprises sending information to a transaction approval application.

In advantageous embodiments, the user approving or disapproving a transaction comprises the user entering credentials. Optionally, an issuer authentication module may verify the owner's credential.

In embodiments, the transaction infrastructure comprises an issuer server that approves or rejects the transaction. In particular embodiments, the issuer server creates a rule to block the transaction if the owner does not indicate their approval.

Optionally, the user account information may be publicly available. Alternatively, the user account information may be available with restricted access. In such cases, determining the user account information may include authenticating the merchant's identity.

According to a further aspect, there is provided a method of authorising a transaction using a user computing device. The method comprises: receiving transaction details from a transaction infrastructure, wherein the transaction was initiated using user account information determined from a public identity of the user; approving or rejecting the transaction; and sending a transaction approval outcome to the transaction infrastructure, wherein the transaction is approved or rejected through the transaction infrastructure after receiving the transaction approval outcome. In embodiments, the method optionally further comprises requesting user credentials information before sending a transaction approval outcome.

According to yet another aspect, a user computing device is provided, comprising a processor and a memory. The processor is programmed to perform a method of authorising a transaction comprising the steps of: receiving transaction details from a transaction infrastructure, wherein the transaction was initiated using user account information determined from a public identity of the user; approving or rejecting the transaction; and sending a transaction approval outcome to the transaction infrastructure, wherein the transaction is approved or rejected through the transaction infrastructure after receiving the transaction approval outcome. In embodiments, the method optionally further comprises requesting user credentials information before sending a transaction approval outcome.

In another aspect, the disclosure provides a method for an issuer server to authorise a transaction between a merchant and a user account, wherein the transaction was initiated using a public identity associated with the user account. The method comprises: receiving transaction details and a user's approval or disapproval of a transaction; wherein the transaction details comprise user account information obtained from a public identity of a user and an indication that the user account information was obtained from a public identity; and approving or rejecting the transaction based on the user's approval or disapproval.

In embodiments, approving or rejecting the transaction comprises creating a rule to that effect. In some embodiments, the rule blocks future transactions associated with a user account when at least one of the transaction details are the same as in a previous rejected transaction. In particular embodiments, the rule blocks future transaction associated with a user account when the future transaction details that are identical to a rejected transaction comprise any combination of the merchant identifier, location, amount, date, public identity used to obtain the account information, and product or services proposed for purchase.

The method may optionally further comprise verifying the account holder's credential before rejecting or approving a transaction based on a user's approval or disapproval.

In embodiments, the method further comprises defining rules for automatic rejection of transactions based on the transaction details, and approving or rejecting a transaction comprises checking the transaction details against those rules. Optionally, the method may further comprise the issuer server receiving the transaction details from a merchant and sending the transaction details to a user computing device for approval or rejection, wherein the issuer server does not send the transaction details to the user computing device if the transaction details qualify for automatic rejection.

In some embodiments, the issuer server blocks the transaction when the user's approval or disapproval is not received within a specified amount of time from the transaction initiation.

Another aspect relates to an issuer server comprising at least one processor and at least one memory. According to this aspect, a suitably programmed processor of the issuer server is adapted to perform the method of the previous aspect.

Using this approach, considerable additional flexibility is provided for the cardholder without sacrificing control. For example, the cardholder can delegate responsibility effectively to a purchaser while retaining control of the purchase process. This approach does not require banking information to be kept private, but maintains control for the cardholder through the back channel for transaction approval.

### Brief Description of Figures

Embodiments of the invention will now be described, by way of example, with reference to the accompanying Figures, of which:
Figure 1 shows an exemplary transaction system in which embodiments of the invention may be used;
Figure 2a and 2b show respectively elements of an account management device and an issuing bank application server for use in embodiments of the invention;
Figure 3 illustrates elements of a method of performing a transaction according to a broad aspect of the invention;
Figure 4 shows a method of authorising a transaction according to an embodiment of the invention.

### Description of Specific Embodiments

Specific embodiments of the invention will be described below with reference to the Figures. The invention provides a method of performing transactions where banking information is publicly accessible and control of transactions performed with this information relies on obtaining approval from an account holder for specific requested transactions. According to the invention, the account holder (or any secure banking device) may not be present at the site of the transaction, whether it physical or virtual. Advantageously, this allows a customer to maintain control over transactions performed using an account under their control, while allowing flexible delegated purchasing and removing the need for banking information to be kept private.

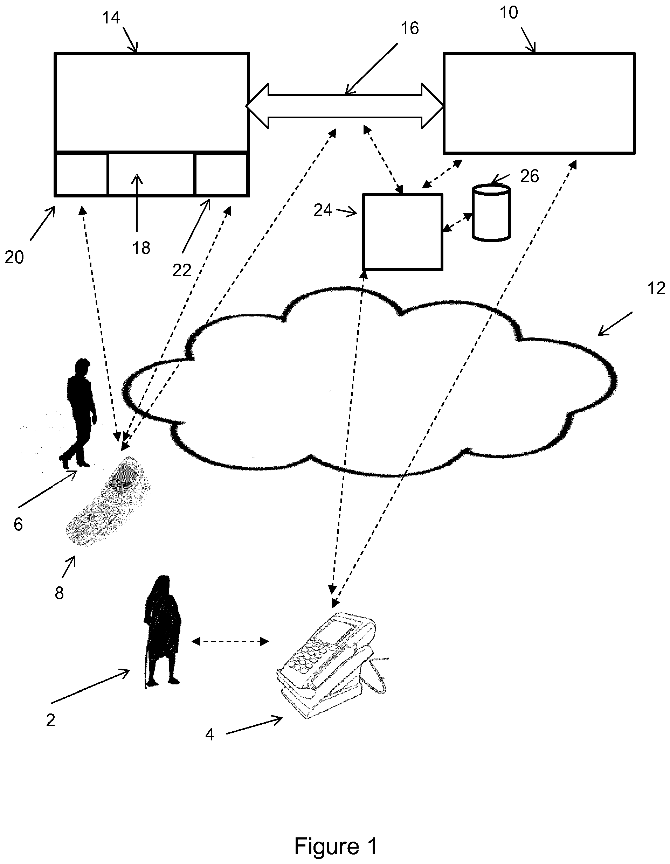

Figure 1 shows an exemplary transaction system in which embodiments of the invention may be used.

A purchaser 2 interacts with a point of interaction terminal 4 for example at a merchant site, by providing public identification information, such as e.g. an email address, a phone number, etc. associated with an account holder (hereafter "account holder" or "cardholder" as the account will typically be associated with a virtual or physical payment device such as a payment card). In some embodiments the purchaser may also be the account holder 6, or may be a different person or entity. As will be described below, using this approach other parties may be able initiate transactions on behalf of the account holder, but these transactions will not complete without account holder approval.

The account holder 6 is provided with an account management device to allow interactions with the transaction infrastructure. Here the account management device is shown as a cellular wireless telecommunications terminal 8 (but it may be any other mobile computing device - in embodiments, this need not even be mobile apparatus and may be a desktop computer). The account management device typically has processors and memories for storing information including firmware and applications run by the respective processors.

Other computer equipment in a conventional infrastructure is typically fixed, but in cases of interest point of interaction (POI) terminals 4 may also be portable. The example shown is a mobile point-of-sale (MPOS) terminal used by a merchant interacting with the user. In some embodiments a purchase may be made online and the point of interaction may be in the form of a merchant website. Such equipment is typically connected or connectable to an acquiring bank 10 or other system in a secure way (either through a dedicated channel or through a secure communication mechanism over a public or insecure channel - here connection is shown as passing through the public internet 12). There is also shown a mechanism to allow connection between the account management device 8 and a card issuing bank 14 or system associated with the user, such as for example a system provided by a transaction infrastructure 16. The transaction infrastructure 16 will connect the card issuer 14 and the acquiring bank 10, allowing transactions to be carried out between them.

An issuing bank application server 18 is shown explicitly as part of the issuing bank 14. While indicated here as a single computing system (comprising processor, memory, communications and any other relevant element of such a system), the issuing bank application server 18 may be provided as elements of a common computing system with other elements of the issuing bank, may be comprised physically or logically separated elements, or may even be implemented wholly or partly as services provided by a trusted third party provider (such as the provider of the transaction infrastructure 16). Two functional elements provided by the issuing bank 14 through the issuing bank application server 18 are shown in more detail. These are an issuer authentication module 20 and an issuer customer server 22. The issuer authentication module 20 is used to authenticate a user to validate a transaction. While the issuer authentication module 20 is shown as connecting directly to the account management device 8 (as may be the case in some use contexts), in some cases the issuer authentication module will be accessed by the account management device 8 through the transaction infrastructure 16. The issuer customer server 22 is also shown as connecting to the account management device 8, though a user may connect to the issuer customer server 22 using any suitable computing device. In embodiments, the account holder 6 uses the issuer customer server 22 to set permissions relating to use of an account under their control. In some embodiments these may optionally be viewed by the purchaser 2.

Also shown is an identity information server 24 with an associated banking information database 26. While these are shown in Figure 1 as generally associated with the transaction infrastructure 16, this is not necessarily the case. In some embodiments, the identity information server 24 and associated information database 26 may be provided by the transaction infrastructure 16. In some embodiments, the identity information server 24 and associated information database 26 may be provided by other parties and may be completely independent of the transaction infrastructure 16. As will be discussed below, the identity information server 24 receives public identification information (or public identity) for an account holder from the point of interaction terminal 4, and determines corresponding user account banking information with the assistance of the banking information database 26. Although the identity information server and associated database are shown here as a single component, they may in fact comprise multiple servers and databases that may be organised hierarchically, such as e.g. individual name servers for domains of a Domain Name System (DNS). The features of such a server and system are not shown explicitly here as they may be implemented by conventional means and do not need to be discussed further to explain the elements of the present disclosure. The information in the identity information server 24 may in embodiments be publicly available, or it may optionally be accessible only by specific parties including merchants registered with the transaction infrastructure. The merchant may require some degree of confidence that the association between the user public identity and the user account information is accurate. Approaches that may be used to assure this are only writing such information to the identity information server or database with explicit approval of the account holder or by a party trusted by the account holder (such as the issuer for the user account).

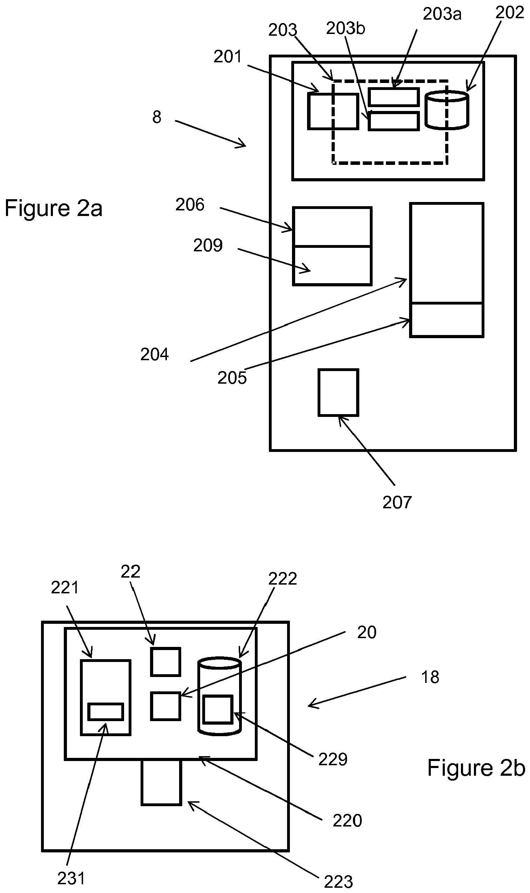

Figures 2a and 2b respectively illustrate schematically relevant functions of an account management device and an issuing bank application server for use in embodiments of the invention.

Figure 2a shows an account management device 8 - this may be a mobile handset though it should be noted that any other portable computing apparatus such as a laptop, notebook or tablet computer can be used as computing apparatus in embodiments of the invention. For some uses, this computing apparatus need not be portable and any fixed computing apparatus with communications capability may be used. The account management device comprises a processor 201 and a memory 202, such that the memory stores and the processor will subsequently run applications (shown generally as residing in an application space 203) such as an account management application 203a and a transaction approval application 203b. The account management device 8 has a user interface comprising a display 204 and a touchscreen 205 (or other input device) and associated drivers to allow a user to enter data into and view information from the applications 203. The account management device 8 also has a communications capability, such as a subscriber information module 206 and wireless communication element 207 together providing the ability to connect to a cellular communications network, in addition or alternatively the account management device 8 may include wifi or wired network access. The account management device may need to perform cryptographic operations in order to interact securely with the bank application server 18 - this may use a secure processing capability 209 within the subscriber information module 206 or be managed in software using technologies such as Host Card Emulation.

Figure 2b describes elements of the issuing bank application server 18. This is shown as comprising a processing environment 220 with processor 221 and memory 222, with associated communications functionality 223. The communications functionality may include networking capability allowing communication with the transaction infrastructure 16, there will be a telecommunications capability allowing communication over a public network with the account management device 8 that will be secured. The processor 221 is a representation of processing capability and may in practice be provided by several processors. Other features, such as a user database, are not shown explicitly here as they may be implemented by conventional means and do not need to be discussed further to explain the elements of the present disclosure.

The issuer authentication module 20 is shown as an element within the processing environment 220, with associated user authentication data 229 stored in the memory 222. The issuer customer server 22 is also shown as an element within the processing environment 220. Elements shown within the processing environment 220 use the processor 221 and the memory 222 to deliver functionality - in the case of the issuer authentication module 20, this is for the issuer 14 to provide confirmation to the transaction infrastructure 16 and ultimately the acquiring bank 10 that a legitimate account holder is involved in a transaction, whereas in the case of the issuer customer server 22, this is for the account holder of the issuing bank 14 to manage parameters and preferences associated with the use of an account. In embodiments, a cryptographic processor 231 may be used to enable secure communication between the issuing bank application server 18 and the account management device 8. As stated above, any or all of the functionalities of the issuer bank application server described in this disclosure may, in embodiments of the invention, be performed by the transaction infrastructure 16.

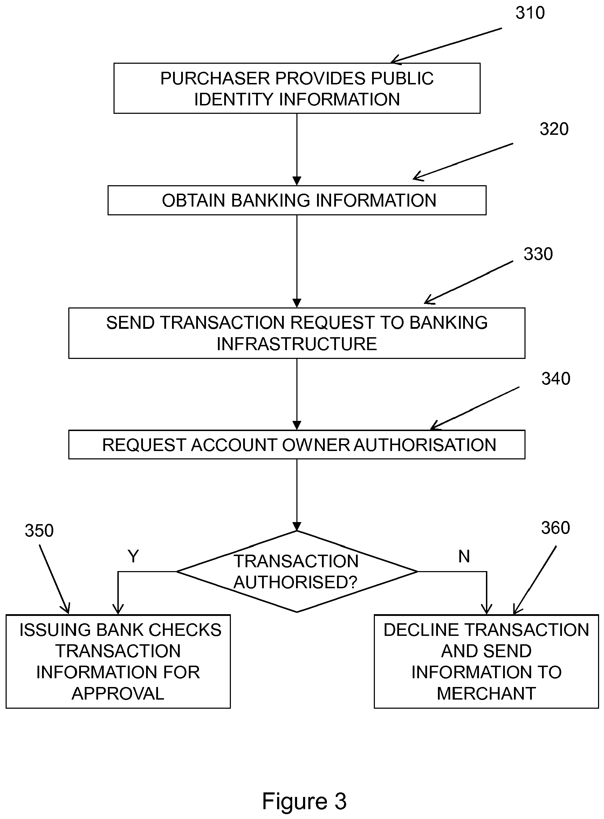

Figure 3 shows in general terms a method of performing a transaction according to embodiments of the invention. The purchaser 2 provides 310 public identity information to a merchant point of interaction terminal 4. The point of interaction terminal 4 uses this information to query the identity information server 24 and obtain 320 banking information associated with the public information, from the banking information database 26. In some embodiments, public identity information may be in the form of e.g. an email address. In such embodiments, the banking information associated with the email address may be stored in a DNS record for the email address, and the terminal may perform a DNS lookup to extract the information (as further described below). Banking information may comprise the same information required for a conventional "card not present" transaction, such as a card number, expiration date and card verification code (CVC). Having obtained the necessary banking information, the transaction progresses similarly to a "card not present" transaction, i.e. the point of interaction terminal sends 330 the transaction request to the acquiring bank 10 which communicates the information to the transaction infrastructure 16. However, before the issuing bank approves the transaction, an additional step is performed whereby authorisation is requested from the account holder 6, for example by the issuing bank application server 340. If the account holder authorises the transaction, the transaction proceeds similarly to a conventional transaction, i.e. the transaction information is checked 350 by the issuing bank 14 for approval and communicated back to the transaction infrastructure 16, upon which the transaction infrastructure 16 sends the approval to the acquiring bank 10, which communicates it back to the point of interaction terminal 4. The clearing and settlement steps of the transaction will not be described in any detail here as they may be performed as known in the art. If the account holder rejects or does not approve the transaction within a specified period of time, the transaction does not proceed to further authorisation, clearing and settlement, and the transaction infrastructure informs the point of interaction terminal (either directly or via the acquiring bank 10) that the transaction has been declined.

In preferred embodiments, if the transaction is declined by the account holder 6, a new rule may be created at the issuer customer server 22 to block any further attempt to complete the transaction. Advantageously, this prevents a merchant from trying to push a transaction in the absence of the account holder's approval, based on the publicly disclosed banking information. The new rule may be specific to a transaction (i.e. an amount and merchant identifier) or may specify broader conditions to reject a transaction, such as e.g. to reject any transactions from a given merchant, using a given public identity information, within a given period of time, for transactions above a given amount, etc. or any combinations of these. The new rule may be managed and used in the same way as rules used by a card issuing bank 14 or transaction infrastructure 16 to determine whether a transaction should be approved or declined in a conventional transaction authorisation process, such as e.g. rules based on customer set conditions or rules designed by the card issuing bank 14 or transaction infrastructure to distinguish expected behaviour of a customer from potentially fraudulent behaviour. Such rules and rule management systems are beyond the scope of this disclosure and will not be described any further.

Advantageously, transactions made using the method of embodiments of the invention may be flagged to indicate that they were initiated based on public information. For example, the transaction request sent by the point of interaction terminal may contain a flag indicating that the transaction should be processed as a "public information" transaction. In such embodiments, transaction requests may be processed similarly to any other "card not present" transaction until they reach the transaction infrastructure 16 or card issuing bank 14, where they will be recognised as requiring account holder approval. Once account holder approval has been obtained the transaction may follow a usual process for card not present transactions, the specifics of which are beyond the scope of this disclosure. In some embodiments, accounts may be associated with a permanent flag to process any transaction as a "public information" transaction. In such embodiments, account holder approval may be requested whenever a transaction using the account is initiated. In some embodiments, an account holder may be able to set preferences (as further explained below) so that any transactions falling in a specific category (e.g. with an online merchant) are automatically processed as "public information" transactions.

In some embodiments, the relevant functionalities of the issuer bank application server 18 may be provided by the transaction infrastructure 16 rather than by the card issuing bank 14. In such embodiments, the transaction may proceed as above in steps 310 to 330 until it reaches the transaction infrastructure 16, where the transaction infrastructure obtains approval from the account holder 6 before sending the transaction information to the card issuing bank 14 for approval. Other steps may follow the same process as a normal card not present transaction.

In some embodiments, the identity information server 24 and associated database 26 may be provided by any of the parties involved in the transaction process, such as e.g. the acquiring bank 10 or issuing bank 14, or the transaction infrastructure 16. In such embodiments, the point of interaction terminal 4 may communicate the public identity information to the acquiring bank 10, optionally together with information to identify the relevant transaction infrastructure 16 and, optionally, card issuing bank 14.

Alternatively, in some embodiments the point of interaction terminal may contact the transaction infrastructure 16 directly to obtain the information and request approval.

In some embodiments, the identity information sever 24 and banking information database 26 may instead of returning banking information directly, contain details to contact an account management platform such as the proprietor's "inControl". This service may return the banking information required and/or may contact the account holder for authorisation. In some embodiments, an account management platform may be independent or may be provided by the transaction infrastructure and/or the card issuing bank. In some embodiments, an account management platform may be integrated with the issuer authentication module and / or the issuer customer server.

In some embodiments, all transactions may require some form of pre-approval by the account holder - for example, there may be a zero spending balance for the account associated with the public identity information until funds are passed to the account for an account holder authorised transaction. In some embodiments, the identity information server 24 and banking information database 26 may, instead of returning banking information in the form of a real card number, return a virtual card number (VCN). Advantageously, such embodiments allow greater control over transactions made with the banking information provided, as an issuer or account holder can at any time cancel a virtual card number to prevent any further transactions using this number, and funds must be deposited into an account associated with the VCN prior to use.

Advantageously, in embodiments the card issuing bank 14 requesting authorisation from an account holder 6 may be in the form of a pre-pre-authorisation or pre-authorisation hold, such that a transaction is in principle authorised and a balance held as unavailable until the merchant clears the transaction (settlement) or the hold expires.

In some embodiments, an account holder may be able to set rules to constrain transactions that are possible using public information. Such rules may be set and accessed via the issuer customer server 22 (as part of the issuer bank application server 18, transaction infrastructure 16 or a separate account management service provided by the transaction infrastructure 16), such that account holder authorisation may only be required or may automatically be declined if transactions fall within specified categories, or such that account holder authorisation may not be required if a transaction fulfils specific, customer-set conditions. For example, it may be possible for an account holder to pre-approve transactions of a certain amount, in a certain location, and/or requested during a specific time period. In some embodiments, the account management application 203a on the account management device 8 may be used to interact with the issuer customer server 18 and / or account management platform if available. For example, the issuer customer server or account management platform may be used to set or modify permissions, set or modify banking information to public identity information relationships, set pre-approved transactions, etc.

In some embodiments, obtaining the account holder's approval may be in the form of sending a message (email, SMS, or any other means of telecommunication) to the account management device 8 (e.g. a mobile phone). Advantageously, an account holder 6 may be provided with information about the transaction, such as e.g. the amount, identity of the merchant, location etc. Any information available in the ISO8583 message that would conventionally be available to a transaction infrastructure 16 may be used to allow an account holder to identify and authorise a transaction. In some embodiments, the account holder authorisation may be obtained through the transaction approval application 203b. This may be in the form of e.g. a mobile application that issues a notification directly on the mobile device when a transaction needs to be reviewed, or in the form of a web application such as a conventional online banking application. For example, an account holder may receive a message (using e.g. SMS, email, etc.) to login to the online transaction approval application and authorise the transaction. In embodiments relying on a transaction approval application 203b, an account holder may optionally be required to enter credentials, such as a password, an electronic signature, etc. in order to approve a transaction. In some embodiments, a single application may be provided to perform the functions of both the account management 203a and transaction approval 203b applications, for example in the form of an account management platform provided by the banking application 16 or issuing bank 14.

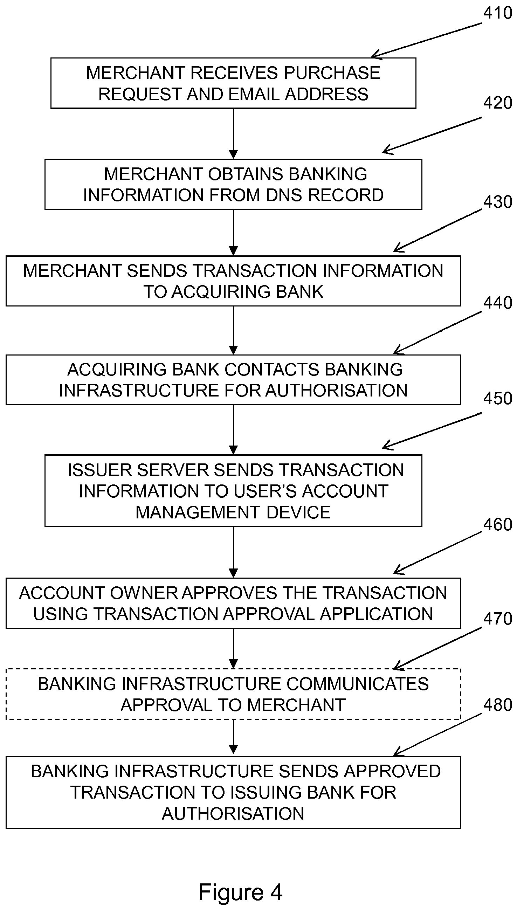

Figure 4 shows a method of authorising a transaction according to an embodiment of the invention. At step 410, a merchant receives a purchase request and an email address. For example, a merchant may simply receive an email indicating an intention to purchase an item or service. Alternatively the email address may be provided in an online form indicating the desired products or services. At step 420, the merchant uses an API integration in their point of sale terminal or an online payment infrastructure to do a DNS lookup to obtain banking information stored in the DNS record associated with the email address. At step 430, the merchant initiates the transaction by sending the transaction information to the acquiring bank with a flag to indicate that the transaction was initiated using public information. At step 440, the acquiring bank contacts the transaction infrastructure 16 to obtain authorisation from the account holder 6 and issuing bank 14. At step 450, an issuer server associated with the transaction infrastructure 16 sends a request for approval to an account holder 6, containing information about the transaction including e.g. the account information, amount of the transaction, identity of the merchant, etc. For example, the issuer server may send a notification to a transaction approval application 203b on an account holder's account management device 8, such as an application on a mobile phone. The account holder's then approves 460 or declines the transaction, for example by clicking a button in the transaction approval application 203b, and this information is communicated back to the issuer server. Optionally, the approval may require the account holder's to enter credentials, in the form of e.g. a password. These may be used by the issuer authentication module 20 to confirm the identity of the account holder 6. The transaction infrastructure then optionally informs 470 the merchant of the outcome of the account holder approval. Alternatively, the merchant may be informed when the transaction has been authorised by the issuing bank 14 as well as the account holder 6. If the transaction is approved, the transaction infrastructure 16 continues to process the transaction like a normal CNP transaction and sends it 480 to the issuing bank 14 for approval. All subsequent steps may be performed similarly to a conventional transaction.

While specific embodiments were described in detail above, the skilled person will appreciate that alternative embodiments may readily be devised that still fall within the scope of the claims. The scope of the invention is defined by the spirit and scope of the claims and is not limited by the embodiments described here.

## Claims

1. A method for a user to perform a transaction with a merchant using a user account associated with a user computing device, wherein the user account is associated with a transaction infrastructure, the method comprising:
initiating the transaction including providing a public identity of the user to the merchant;
the merchant determining user account information associated with the public identity, and providing transaction details to the transaction infrastructure for approval;
sending the transaction details to the user computing device;
the user approving or disapproving the transaction at the user computing device, and sending the approval or disapproval to the transaction infrastructure;
wherein the transaction is approved or rejected through the transaction infrastructure after the user's approval or disapproval is received.

2. The method of claim 1, wherein providing transaction details to the transaction infrastructure comprises providing an indication that the user account information was obtained from public identity information.

3. The method of any preceding claim, wherein the public identity information is an email address, optionally wherein obtaining user account information involves a DNS lookup.

4. The method of any preceding claim, wherein sending transaction details to a user computing device comprises sending information to a transaction approval application.

5. The method of any preceding claim, wherein the user approving or disapproving a transaction comprises the user entering credentials, optionally wherein an issuer authentication module verifies the owner's credential.

6. The method of any preceding claim, wherein the transaction infrastructure comprises an issuer server that approves or rejects the transaction, optionally wherein the issuer server creates a rule to block the transaction if the owner does not indicate their approval.

7. The method of any preceding claim, wherein the user account information is publicly available, or wherein the user account information is available with restricted access and determining the user account information includes authenticating the merchant's identity.

8. A method of authorising a transaction using a user computing device, the method comprising:
receiving transaction details from a transaction infrastructure, wherein the transaction was initiated using user account information determined from a public identity of the user;
approving or rejecting the transaction; and
sending a transaction approval outcome to the transaction infrastructure, wherein the transaction is approved or rejected through the transaction infrastructure after receiving the transaction approval outcome.

9. The method of claim 8, further comprising requesting user credentials information before sending a transaction approval outcome.

10. A user computing device comprising a processor and a memory, wherein the processor is programmed to perform the method of claims 8 or 9 to authorise a transaction.

11. A method for an issuer server to authorise a transaction between a merchant and a user account, wherein the transaction was initiated using a public identity associated with the user account, the method comprising:
receiving transaction details and a user's approval or disapproval of a transaction; wherein the transaction details comprise user account information obtained from a public identity of a user and an indication that the user account information was obtained from a public identity; and
approving or rejecting the transaction based on the user's approval or disapproval.

12. The method of claim 11, wherein approving or rejecting the transaction comprises creating a rule to that effect.

13. The method of claim 12, wherein the rule blocks future transactions associated with a user account when at least one of the transaction details are the same as in a previous rejected transaction, optionally wherein the rule blocks future transaction associated with a user account when the future transaction details that are identical to a rejected transaction comprise any combination of the merchant identifier, location, amount, date, public identity used to obtain the account information, and product or services proposed for purchase.

14. The method of any of claims 11 to 13, further comprising:
(i) verifying the account holder's credential before rejecting or approving a transaction based on a user's approval or disapproval;
(ii) defining rules for automatic rejection of transactions based on the transaction details, and approving or rejecting a transaction comprises checking the transaction details against those rules, optionally further comprising the issuer server receiving the transaction details from a merchant and sending the transaction details to a user computing device for approval or rejection, wherein the issuer server does not send the transaction details to the user computing device if the transaction details qualify for automatic rejection; and/or
(iii) rejecting the transaction when the user's approval or disapproval is not received within a specified amount of time from the transaction initiation.

15. An issuer server comprising at least one processor and at least one memory, wherein a suitably programmed processor of the issuer server is adapted to perform the method of any of claims 11 to 14.
